Europäisches Patentamt

European Patent Office

Office européen des brevets

(11) Veröffentlichungsnummer: **0 514 898 A1**

## (12) EUROPÄISCHE PATENTANMELDUNG

(21) Anmeldenummer: **92108608.8**

(22) Anmeldetag: **21.05.92**

(51) Int. Cl.5: **A61C 1/00**, H01S 3/115

(30) Priorität: **21.05.91 FR 9106137**

(43) Veröffentlichungstag der Anmeldung:
**25.11.92 Patentblatt 92/48**

(84) Benannte Vertragsstaaten:
**CH DE FR GB IT LI**

(71) Anmelder: **LASAG AG**
**Mittlere Strasse 52**
**CH-3600 Thun(CH)**

(72) Erfinder: **Limberger, Hans**
**Chemin de Champrilly 19**
**CH-1008 Lausanne(CH)**

Erfinder: **Tasey, Emile**
**Rue du Centre 74**
**CH-1025 St-Sulpice(CH)**
Erfinder: **Rink, Klaus**
**Avenue des Roses 8B**
**CH-1009 Pully(CH)**
Erfinder: **Delacrétaz, Guy**
**Chemin Neuf 5**
**CH-1028 Préverenges(CH)**

(74) Vertreter: **Caron, Gérard et al**
**ICB Ingénieurs Conseils en Brevets SA**
**Passage Max. Meuron 6**
**CH-2001 Neuchâtel(CH)**

(54) **Laserpuls zur Abtragung von Zahnhartsubstanz.**

(57) Es wird mit einem Lasergerät ein Laserpuls (24) zur Abtragung von Zahnhartsubstanz erzeugt, der zwei sich durch die Pulsbreiten und maximalen Leistungen signifikant unterscheidende aufeinanderfolgende Pulsbereiche (23, 25) aufweist. Die maximale Leistung des ersten Pulsbereichs (23) ist wenigstens um den Faktor 20 größer als die des zweiten Pulsbereichs (25). Der Puls (24) mit den beiden Pulsbereichen (23, 25) wird erzeugt, indem im Laserresonator die Rückkopplung mit einem Analysator und einem Lambda-Viertel-Plättchen zu Beginn des Pumplichtpulses unterbrochen ist und nach einer vorgegebenen Zeit die Rückkopplungsverluste mit einer charakteristischen Zeitkonstante zwischen 100 ns und 1 $\mu$s, bevorzugt mit 450 ns gegen Null durch Schalten einer Pockelszelle verringert werden. Um obiges Verhältnis der maximalen Leistungen zu erhalten, werden die Rückkopplungsverluste auf den $5 \cdot 10^{-2}$-ten der verlustfreien Rückkopplung abgesenkt.

Mit dem ersten Pulsbereich (23) wird eine definierte Strahlungsabsorptionsbereitschaft von gesunder wie auch von kariöser Zahnhartsubstanz erreicht, während der zweite Pulsbereich (25) dann Zahnhartsubstanz abträgt.

Fig. 2

EP 0 514 898 A1

Die Erfindung betrifft einen Laserpuls zur Abtragung von Zahnhartsubstanz gemäß dem Oberbegriff des Patentanspruchs 1, ein zur Erzeugung eines Laserpulses ausgebildetes Lasergerät gemäß dem Oberbegriff des Patentanspruchs 7 und ein Verfahren zur Erzeugung eines Laserpulses gemäß dem Oberbegriff des Patentanspruchs 12.

Von Karies befallen Bereiche eines Zahnes wurden bis in den noch gesunden Bereich der Zahnhartsubstanz mit Bohrern entfernt und anschließend mit einem zahn- und mundverträglichen Material verschlossen. Anstelle die von Karies befallen Bereiche, sowie die sie umgebenden gesunden Bereiche, welche bei der Behandlung in eine Form gebracht werden müssen, in der Plomben, Kronen etc. gut halten, mit einem Bohrer zu entfernen, wurden in der DE-OS 2 308 554, der WO 89/06 518, der US 4 503 853, der US 4 940 411, der US 4 818 230, US 4 521 194, der US 4273 535, der DE-OS 39 11 871, der WO 90/01 906 und der WO 89/08 432 zur Abtragung der Zahnhartsubstanz Laserpulse verwendet.

In obigen Dokumenten wurden gütegeschaltete kurze, "nadelförmige" Laserpulse oder bei gepulst gepumpten Lasern Laserpulse, welche annähernd dem Leistungsverlauf der Leistung der Anregung folgten, verwendet. Es wurden, Nd:YAG-Laser, Excimer sowie Laser mit Wellenlängen im nahen Infrarot bei etwa 2 bis 3 $\mu$m eingesetzt.

Bei einigen aus obigen Dokumenten bekannten Lasern ist die Laserpulsenergie derart ausgelegt, daß nur kariöse Zahnhartsubstanz abgetragen und gesundes Material durch die Laserstrahlung nicht angegriffen wurde. Diese Verfahren haben den Nachteil, daß eine Verankerung eines teilweisen Zahnersatzes bzw. einer Zahnfüllung nicht möglich war.

Bei der Verwendung nadelförmiger Laserpulse ist die Zahnhartsubstanzabtragungsrate gering, so daß sich lange Zahnbehandlungszeiten ergaben. Wurden gepulste Laser verwendet, deren Pulsform etwa dem Anregungsleistungverlauf entsprach, konnte nur eine statistische Abtragungrate mit geringer Effizienz erzielt werden. Es traten mitunter auch Schädigungen des Zahnnervs auf.

Der Erfindung liegt die Aufgabe zugrunde, Laserpulse mit einem Lasergerät zu erzeugen, welche eine ausreichende Materialabtragungsrate der Zahnhartsubstanz unter schonender Behandlung des zu behandelnden Zahns, insbesondere des Zahnnerves, gewährleisten und mit denen sowohl kariöse wie auch gesunde Zahnhartsubstanz abgetragen werden können.

Die Lösung der Aufgabe ist in Hinblick auf die zur Abtragung von Zahnhartsubstanz einzusetzenden Laserpulse Gegenstand des Patentanspruchs 1, auf ein die Pulse erzeugendes Lasergerät Gegenstand des Patentanspruchs 7 sowie auf das Verfahren zur Erzeugung eines Laserpulses Gegenstand des Patentanspruchs 11. Bevorzugte Ausführungsformen des Laserpulses sind in den Patentansprüchen 2 bis 6, des Lasergeräts in den Patentansprüchen 8 bis 11 und des Verfahrens in den Patentansprüchen 13 und 14 beschrieben.

Durch die Verwendung eines Laserpulses mit zwei aufeinanderfolgenden sich durch ihre Pulsbreiten und maximale Leistungen signifikant unterscheidenden Pulsbereichen, wird der erste Pulsbereich lediglich zu einer definierten Initiierung einer Strahlungsabsorptionsbereitschaft der abzutragenden Zahnhartsubstanz verwendet, während der zweite Pulsbereich dann die für die Abtragung bei erreichter Strahlungsabsorptionsbereitschaft geforderte Energie liefert. Durch die Erzeugung der Strahlungsabsorptionsbereitschaft der Zahnhartsubstanz mit nachfolgender Strahlungsabsorption zur Materialabtragung bei sehr geringen nicht für eine Absorptionsinitierung ausreichenden Leistungen kann Zahnhartsubstanz abgetragen werden, ohne diese über die Maßen zu erwärmen und ohne eine den Zahnnerv beeinträchtigende Schockwelle zu erzeugen.

Bevorzugte Ausführungen des Laserpulses, des Lasergeräts und des Verfahrens zur Erzeugung eines Laserpulses sowie deren Vorteile ergeben sich aus der nachfolgenden Beschreibung.

Im folgenden wird ein Beispiel des erfindungsgemäßen Laserpulses, des Lasergeräts zur Erzeugung eines Laserpulses sowie des Verfahrens zur Erzeugung eines Laserpulses anhand der Zeichnungen näher erläutert. Es zeigen:

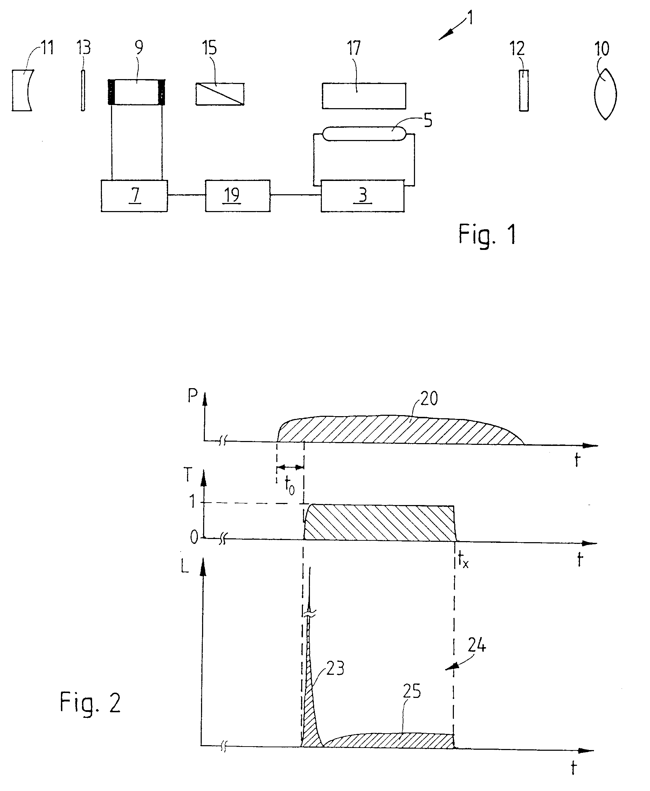

Fig. 1    ein Blockschema eines Lasergeräts zur Erzeugung eines Laserpulses, und Fig. 2 den zeitlichen Verlauf eines mit dem in Figur 1 dargestellten Lasergeräts erzeugten Laserpulses (L), einen zu dessen Erzeugung verwendeten zeitlichen Verlauf eines Pumplichtpulses (P) sowie die Transmission (T) einer im Laserresonator des Lasergeräts angeordneten, auf die Strahlungsrückkopplung wirkenden Pokkelszelle mit Analysator, wobei "1" eine ungedämpfte und "0" eine vollständig gedämpfte Rückkopplung bedeutet.

Der in **Figur 1** mittels eines Blockschemas dargestellte Laser hat einen Laserresonator **1**, eine Stromversorgung **3** für eine im Resonator **1** angeordnete Pumplichtquelle **5**, einem Spannungsgenerator **7** für eine im Resonator **1** angeordnete Pokkelszelle **9** und eine Fokusiervorrichtung **10** außerhalb des Resonators **1**, welche schematisch als Linse dargestellt ist. Eine Manipulationseinrichtung zur Laserstrahlführung außerhalb des Resonators **1**, welche eine Wasser- und Luftzuführung für die Kühlung und Reinigung des zu behandelnden Zahns aufweisen kann, ist nicht dargestellt. Als Laserstrahlführung kann eine Glasfaser und als Pumplichtquelle können Entladungslampen, Diodenarrays, etc. verwendet werden.

Der Resonator **1** wird durch einen hochreflektierenden Resonatorspiegel **11**, links in **Figur 1**, mit einem Reflexionsgrad von etwa 99,5% und einer einen Krümmungsradius von 5 m aufweisenden konkaven Spiegeloberfläche und einen planen Auskoppelspiegel **12** mit einem Reflexiongrad von etwa 30% begrenzt.

Im Resonator **1** befindet links in **Figur 1** vor dem Resonatorspiegel **11** ein Lambda-Viertel-Plättchen **13**, dann die Pockelszelle **9** und ein Analysator **15**, dessen Extinktionsverhältnis mindestens 1 : 200 beträgt. Zwischen Analysator **15** und Resonatorspiegel **12** ist ein Nd:YAG-Kristall **17** als optisch aktives Medium angeordnet. Der Kristall **17** befindet sich in einer nicht dargestellten Kavität und ist optisch durch die Pumplichtquelle **5** anregbar. Der Abstand der reflektierenden Oberflächen der beiden Resonatrospiegel **11** und **12** beträgt 60 cm. Lambda-Viertel-Plättchen **13** und Analysator **15** sind derart zueinander angeordnet, daß bei spannungsloser Pockelszelle **9** vom Kristall **17** ausgehende Strahlung vollständig, d. h. bis auf wenigstens den $5 \cdot 10^{-2}$-ten Teil der vollständigen, einem Wert 1 entsprechenden Transmission im Resonator **1** gesperrt wird.

Die Pumplichtquelle **5** ist mit dem Stromversorgungsgerät **3** elektrisch verbunden. Die Dauer des durch die Pumplichtquelle **5** fließenden elektrischen Stroms und dessen Höhe wird durch ein mit dem Stromversorgungsgerät **3** verbundenes Steuergerät **19** geregelt, welches ebenfalls mit dem Spannungsgenerator **7** für die Pockelszelle **9** verbunden ist. Mit dem Steuergerät **19** wird ebenfalls die zeitliche Zuordnung der an die Pockelszelle angelegten Spannung zum Pumplichtpuls **20** eingestellt und durch dieses geregelt.

Zum Abtragen von Zahnhartsubstanz werden Laserpulse **24** mit einer Repetitionsfrequenz zwischen 0,5 und 30 Hz, bevorzugt von 5 Hz erzeugt. Die Repetitionsfrequenz wird mit Hilfe des Steuergeräts **19** eingestellt. Das Stromversorgungsgerät **3** wird zur Zündung und Stromversorgung der Pumplichtquelle **5** vom Steuergeräts **19** angesteuert. Die Pumplichtquelle **5** sendet einen Pumplichtpuls **20** entsprechend des in **Figur 2a** dargestellten Leistungsverlaufs je nach gewünschter Abtragung der Zahnhartsubstanz aus. Diese Strahlung wird über eine nicht dargestellte Kavitätsverspiegelung in den Laserkristall geleitet und in diesem gespeichert, da noch keine Spannung an die Pockelszelle **9** gelegt wurde. Infolge des durch (Pockelszelle **9**,) Analysator **15** und Lambda-Viertelplättchen **13** gesperrten einen Resonatorhälfte kann die vom Kristall ausgesandte stimulierten Strahlung nicht rückgekoppelt werden; der Laser schwingt nicht an, obwohl er durch die Pumplichtquelle **5** mindestens einhundertfach über seine Anschwingschwelle gepumpt wird, wobei unter Anschwingschwelle der Pumplichtwert verstanden wird, bei dem der Laser mit ungedämpfter Rückkopplung gerade anschwingt. Bei einer ungedämpften Rückkopplung würde der Laser ungefähr 50 $\mu$s nach Pumplichtbeginn anschwingen, wobei der Anschwingbeginn von der resonatorspezifischen Verlusten, wie Reflexionsgrad der Resonatorspiegel, der Pumpkavität, etc. und der Pumpleistung der Pumplichtquelle **5** abhängt. Etwa 10 $\mu$s nach diesem "ungedämpften Anschwingbeginn", d. h. nach einer Zeit $t_0$ von etwa 60 $\mu$s nach Beginn des Pumplichtpulses **20** wird eine Spannung an der Pockelszelle **9** mit einer Schaltzeit, welche eine charakteristische Zeitkonstante von 450 ns hat, gelegt. Die Spannung ist so hoch gewählt, daß die Pockelszelle **9** eine Phasendrehung hervorruft, welche gerade die Phasendrehung des Lambda-Viertel-Plättchens **13** aufhebt; die Rückkopplungsverlust im Resonator **1** werden mit der gewählten Zeitkonstante aufgehoben. Diese zum Schalten der Pockelszelle **9** langsame Schaltzeit ist ausschlaggebend für die Bildung eines ersten Pulsbereichs **23** im sich nun bildenden Laserpuls **24**. Infolge der verhältnismäßig langsamen Schaltzeit gegenüber aus dem Stand der Technik bekannten Schaltzeiten, welche nur bei einigen wenigen Nanosekunden - etwa der Laufzeit des Lichts innerhalb des Resonators- liegen, kommt die Rückkopplung nur "schleppend in Gang" und es bildet sich, wie in **Figur 2** dargestellt, ein scharfer erster Laserpulsbereich **23** mit einer Pulsbreite von 50 bis 70 ns mit einer Spitzenleistung von etwa 300 kW.

Nach Abklingen dieses hohen und schmalen ersten Pulsbereichs **23** beginnt sich ein zweiter Pulsbereich **25** zu bilden, dessen maximale Leistung bei 3 kW liegt, und dessen pulsverlauf annähernd dem Verlauf des Pumplichtpulses **20** folgt. Nach Abschalten der elektrischen Spannung an der Pockelszelle **9** zum Zeitpunkt $t_x$, wie in **Figur 2** dargestellt, wird die Rückkopplung in Resonator **1** erneut unterbunden und die Leistung des zweiten Pulsbereichs **25** fällt auf Null ab.

Die durch den Resonatorspiegel **12** transmittierte Laserstrahlung wird mit der Fokussiervorrichtung **10** auf die Stelle am Zahn fokussiert, an der Zahnhartsubstanz abgetragen werden soll. Die Bestimmung des fokussierten Strahldurchmesser **d** ergibt sich aus der bekannten Fokussierungsgleichung: d = Brennweite der Fokussiervorrichtung multipiziert mit dem Öffnungswinkel des aus dem Laserresonator **1** austretenden Laserstrahls, wobei unter Öffnungswinkel der doppelte Winkel zwischen der Strahlachse und der Stahlbegrenzung, an der die Intensität gegenüber der Intensität in der Strahlachse auf den $1/e^2$ -ten Teil abgefallen ist, verstanden wird.

Die Fokussiervorrichtung **10** wird derart ausgelegt, daß die Strahlung des ersten Pulsbereichs **23** auf eine Intensität von mindestens 200 bis 5 000 **MW**/cm$^2$, bevorzugt 300 bis 1 000 **MW**/cm$^2$ fokussiert wird. Die benötigten Intensitätswerte richten sich danach, ob es sich um (kariöse oder) gesunde Zahnhartsubstanz des Zahnbeins, des Zahnschmelzes oder der Zahnwurzel handelt und wie groß der abzutragende Bereich ist. Ferner ist zu berücksichtigen, ob der Zahn trocken oder naß ist.

Eine Pockelszelle ist schaltungstechnisch als ein elektrischer Kondensator zu betrachten. Die charakteristische Zeitkonstante für die Schaltzeit der Pockelszelle ergibt sich somit in erster Näherung aus deren Kapazität und dem schaltungstechnischen ohmschen Widerstand der elektrischen Zuleitungen, wobei ein beim Kristall der Pockelszelle auftretender piezoelektrischer Effekt vernachlässigt wird. Um die von Materialbearbeitungslasern bekannten kurzen Schaltungszeiten sogenannter gütegeschalteter Laser, welche die Resonatorverluste durch Schalten einer Pockelzelle erzeugen, zu verlängern, müssen entsprechend der charakteristischen Zeitkonstante Kondensatoren parallel geschaltet werden. Nur mit einer verlängerten Schaltzeit der Pockelszelle wird ein erster Pulsbereich **23** mit den oben beschriebene Spezifikationen erreicht.

Je nach verwendeter Zusatzkapazität lassen sich Laserpulsbreiten des ersten Pulsbereichs **23** zwischen 15 ns und 2 $\mu$s erreichen. Die maximale Leistung des ersten Pulsbereichs **23** ergibt sich aus der Zeit $t_0$ und der Leistung der Pumplichtquelle sowie des erreichbaren Extinktionsverhältnisses von Pockelszelle, Lambda-Viertel-Plättchen und Analysator. Die maximale Leistung des ersten Pulsbereichs **23** liegt zwischen 10 und 1000 kW und wird für eine Initierung der Absorption der Strahlung auf der Zahnhartsubstanz auf vorzugsweise 300 kW eingestellt. Die im ersten Pulsbereich **23** enthaltende Energie ergibt sich aus dem zeitlichen Pulsverlauf und dessen Leistung und liegt zwischen 100 $\mu$J und 100 mJ; für die Abtragung der Zahnhartsubstanz werden bevorzugte Werte von etwa 20 mJ gewählt.

Auf das Lambda-Viertel-Plättchen **13** kann verzichtet werden. Es ist dann jedoch eine andere Ansteuerung der Pockelszelle **9** zu wählen.

Die Leistung des zweiten Pulsbereichs **25** hängt, wie oben bereits beschrieben, von der Leistung des in den Kristall eingestrahlten Pumplichtpuls **20** ab, welcher wiederum von der Güte der nicht dargestellten Kavität und der Leistung der Pumplichtquelle **5** abhängt.

Die Länge des zweiten Pulsbereichs **25** kann durch die Länge des Pumplichtpulses **20** bestimmt werden. Sie kann aber auch mit der Pockelszelle und dem Analysator bestimmt werden, indem durch Anlegen einer elektrischen Spannung an die Pockelszelle die Rückkopplung im Resonator **1** unterbrochen wird, worauf keine Laserstrahlung ausgesandt wird. Es lassen sich zweite Pulsbereiche **25** mit einer Pulsdauer zwischen 10 $\mu$s und 20 ms, für die Zahhartsubstanzabtragung bevorzugt zwischen 200 $\mu$s und 1000 $\mu$s erzeugen, wobei eine genaue zeitliche Pulslängeneinstellung nur mit der elektrischen Spannung an der Pockelszelle **9** möglich ist. Eine Variation der Pulsbreite des zweiten Pulsbereichs **25** ist notwendig um einen optimalen Abtragungswert für die Zahnhartsubstanz einzustellen. Der optimale Abtragungswert richtet sich, analog zu den bereits bekannten Abtragungsmechanismen mit unterschiedlichen Bohrern, nach der Abtragungsstelle auf dem Zahn, der Größe und Tiefe der herzustellenden Kavität, etc.. Bevorzugterweise wird bei der Pulsbreiteneinstellung mit kurzen Pulsbreiten der zweiten Pulsbereiche **25** begonnen, um eine Schädigung des Zahns auszuschließen. Die maximale Leistung des zweiten Pulsbereichs **25** liegt zwischen 0,5 und 10 kW und wird für die Abtragung von Zahnhartsubstanz bevorzugt bei 3 kW gehalten. Die Energie des zweiten Pulsbereichs **25** liegt zwischen 10 mJ und 10 J, wobei bevorzugt 600 mJ verwendet werden.

Als aktives Lasermedium wird, wie oben bereits beschrieben, bevorzugt ein Nd:YAG-Kristall verwendet, der optisch mit einer Pumplichtquelle **5** gepumpt wird. Der Laserresonator wird derart ausgelegt, daß die Laserlinie von etwa 1,06 $\mu$m des Neodym-dotierten Kristalls anschwingt. Es können jedoch auch andere laseraktive Festkörper verwendet werden. Es ist jedoch wichtig, daß deren Fluoreszenslebensdauer wenigstens 50 $\mu$s beträgt. Fluoreszenslebensdauern zwischen 100 und 400 $\mu$s und Wellenlängen zwischen 1,05 und 1,35 $\mu$m weisen z. B. die folgenden auch als laseraktives Medium verwendbaren Festkörper auf: $Nd:Ca_5$-$(PO_4)_3 F$ mit 1,0629 $\mu$m; $Nd:Y_3Al_5O_{12}$ mit 1,06415 $\mu$m; $Nd:YAlO_3$ mit 1,0644 $\mu$m; $Nd:YAlO_3:Cr^{3+}$ mit 1,0644 $\mu$m; $Nd:YAlO_3$ mit 1,0796 $\mu$m und $Nd:YAlO_3$ mit 1,3416 $\mu$m. Es kann ferner auch $Nd:YVO_4$ mit 94 $\mu$s und 1,063 und 1,340 $\mu$m sowie Rubin mit 3000 $\mu$s verwendet werden.

**Patentansprüche**

1. Laserpuls **(24)** zur Abtragung von Zahnhartsubstanz, **gekennzeichnet durch** zwei sich durch ihre Pulsbreite und maximale Leistung signifikant unterscheidende aufeinanderfolgende Pulsbereiche **(23, 25)**, wobei die maximale Leistung des ersten Pulsbereichs **(23)** wenigstens um den Faktor 20 größer ist als die maximale Leistung des zweiten Pulsbereichs **(25)** und die Pulsbreite des ersten Pulsbereichs **(23)** kürzer ist als die des zweiten **(25)**.

2. Laserpuls **(24)** nach Anspruch 1, **dadurch gekennzeichnet**, daß die maximale Leistung des zweiten Pulsbereichs **(25)** so klein gewählt ist, daß sie alleine ohne vorherige Einstrahlung des ersten Pulsbereichs **(23)** nicht zur Abtragung von Zahnhartsubstanz verwendbar ist.

3. Laserpuls **(24)** nach Anspruch 1 oder 2, **dadurch gekennzeichnet,** daß die Pulsbreite des ersten Pulsbereichs **(23)** zwischen 15 ns und 2 $\mu$s, bevorzugt zwischen 50 ns und 70 ns, und die des zweiten **(25)** zwischen 10 $\mu$s und 20 ms, bevorzugt zwischen 200 $\mu$s und 1000 $\mu$s, liegt.

4. Laserpuls **(24)** nach einem der Ansprüche 1 bis 3, **dadurch gekennzeichnet,** daß die Energie des ersten Pulsbereichs **(23)** zwischen 100 $\mu$J und 100 mJ, bevorzugt bei 20 mJ, und die des zweiten **(25)** zwischen 10 mJ und 10 J, bevorzugt bei 600 mJ, liegt.

5. Laserpuls **(24)** nach einem der Ansprüche 1 bis 4, **dadurch gekennzeichnet,** daß die maximale Leistung im ersten Pulsbereich **(23)** zwischen 10 und 1000 kW, bevorzugt bei 300 kW, und die des zweiten **(25)** zwischen 0,5 und 10 kW, bevorzugt bei 3 kW, liegt.

6. Laserpuls **(24)** nach einem der Ansprüche 1 bis 5, **gekennzeichnet durch** eine Strahlung mit einer Wellenlänge zwischen 1,05 und 1,35 $\mu$m.

7. Zur Erzeugung eines Laserpulses **(24)** nach einem der Ansprüche 1 bis 6 ausgebildetes Lasergerät.

8. Lasergerät nach Anspruch 7 mit einer gepulsten Anregung der Laserinversion und einer die Rückkopplungsverluste im Laserresonator **(1)** steuernden Vorrichtung, **dadurch gekennzeichnet,** daß die Vorrichtung einen elektrischen Spannungsgenerator **(7)**, einen Analysator **(15)** und eine mit dem Spannungsgenerator **(7)** elektrisch verbundene Pockelszelle **(9)** als einstellbaren Polarisator hat, wobei das Transmissionsverhältnis von einfallender zu transmittierter Strahlungsleistung in Abhängigkeit der angelegten Spannung zwischen nahezu 1 und kleiner als 5$\bullet$10$^{-2}$ einstellbar ist.

9. Lasergerät nach Anspruch 8, **dadurch gekennzeichnet,** daß die an der Pockelszelle **(9)** anliegende, das Transmissionsverhältnis

kleiner 5$\bullet$10$^{-2}$ bewirkende elektrische Spannung mit einer charakteristischen Zeitkonstante zwischen 100 ns und 1 $\mu$s, bevorzugt von 450 ns auf einen nahezu vollständige Transmission bewirkenden Spannungswert schaltbar ist.

10. Lasergerät nach Anspruch 8 oder 9, **gekennzeichnet durch** einen Festkörper als laseraktives Medium mit einer Fluoreszenzabklingzeit mit wenigstens 50 $\mu$s.

11. Lasergerät nach einem der Ansprüche 7 bis 10 zur Erzeugung eines Laserpulses **(24)** nach einem der Ansprüche 1 bis 6 mit einer Vorrichtung **(10)** zur Fokussierung der aus dem Laserresonator austretenden Laserstrahlung, **dadurch gekennzeichnet,** daß die Vorrichtung **(10)** derart ausgebildet ist, daß die maximale Leistung des ersten Pulsbereichs **(23)** auf eine Intensität zwischen 200 und 5000 **MW**/cm$^2$, bevorzugt zwischen 300 und 1000 **MW**/cm$^2$, fokussierbar ist.

12. Verfahren zur Erzeugung eines Laserpulses **(24)** gemäß einem der Ansprüche 1 bis 6 mit einem Lasergerät gemäß einem der Ansprüche 7 bis 11 zur Abtragung von Zahnhartsubstanz, bei dem ein die rückgekoppelte Strahlung im Laserresonator **(1)** dämpfendes Schaltelement **(15, 9, 13)** nach einem vorgegebenen Zeitbereich in den nahezu vollständig strahlungstransmittierenden Zustand durch Verändern einer an ihm **(9)** anliegenden elektrischen Spannung gebracht wird, **dadurch gekennzeichnet,** daß spätestens zu Beginn des Pumpvorgangs des aktiven Lasermediums **(17)** die Spannung am Schaltelement **(15, 9, 13)** auf einen ersten Wert geschaltet wird, bei dem höchstens der 5$\bullet$10$^{-2}$-te Teil der auf das Schaltelement **(15, 9, 13)** fallenden Strahlung transmittiert wird, und das Schaltelement **(15, 9, 13)** nach dem vorgegebenen Zeitbereich mit einer charakteristischen Zeitkonstante zwischen 100 ns und 1 $\mu$, bevorzugt von 450 ns auf einen zweiten Spannungswert für die nahezu vollständige Transmission der Strahlung im Resonator **(1)** geschaltet wird.

13. Verfahren nach Anspruch 12, **dadurch gekennzeichnet,** daß das Schaltelement **(15, 9, 13)** nach einem weiteren Zeitbereich zwischen 10 $\mu$s und 20 ms auf einen dritten Spannungswert geschaltet wird, der die im Resonator **(1)** rückgekoppelte Strahlung derart dämpft, daß der zweite Pulsbereich **(25)** auch bei einer noch andauernden Anregung des aktiven Mediums beendet wird.

**14.** Verfahren nach Anspruch 12 oder 13, **dadurch gekennzeichnet,** daß das aktive Lasermedium repetitiv mittels Anregungspulsen mit Pulsbreiten zwischen 100 $\mu$s und 20 ms angeregt wird und zwischen den Pulsen keine Anregung erfolgt.

Fig. 1

Fig. 2

Europäisches
Patentamt

**EUROPÄISCHER RECHERCHENBERICHT**

Nummer der Anmeldung

EP    92 10 8608

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 930 901 (J.C. JOHNSON ET AL.)<br><br>* Spalte 2, Zeile 4 - Zeile 12 *<br>* Spalte 5, Zeile 8 - Zeile 26 *<br>* Abbildungen 2,3 *<br>--- | 1,2,6-8,<br>10,12-14 | A61C1/00<br>H01S3/115 |
| A | EP-A-0 365 754 (INTERNATIONAL BUSINESS MACHINES)<br>* Spalte 2, Zeile 42 - Zeile 47 *<br>* Spalte 4, Zeile 9 - Zeile 28 *<br>* Spalte 11, Zeile 43 - Zeile 48 *<br>* Ansprüche 1,5,6 *<br>--- | 1,7 | |
| A | EP-A-0 392 951 (G. LEVY)<br>* Zusammenfassung *<br>* Seite 4, Zeile 39 - Zeile 51 *<br>--- | 1,3-7,10 | |
| A | IEEE JOURNAL OF QUANTUM ELECTRONICS.<br>Bd. QE-8, Nr. 2, Februar 1972, NEW YORK US<br>Seiten 120 - 125;<br>E. KOCHER ET AL.: 'Dynamics of laser processing in transparent media'<br>* Zusammenfassung; Abbildung 2A *<br>* Seite 121, linke Spalte, Absatz 1 *<br>--- | 1,3-7,<br>10,11 | **RECHERCHIERTE SACHGEBIETE (Int. Cl.5 )** |
| A | US-A-5 001 716 (B.C. JOHNSON ET AL.)<br>* Spalte 1, Zeile 12 - Zeile 33 *<br><br>----- | 1,7,8,12 | A61C<br>H01S<br>A61B<br>A61F<br>B23K |

Der vorliegende Recherchenbericht wurde für alle Patentansprüche erstellt

| Recherchenort | Abschlußdatum der Recherche | Prüfer |
|---|---|---|
| DEN HAAG | 03 SEPTEMBER 1992 | BATTIPEDE F. |

EPO FORM 1503 03.82 (P0403)